# FASCICULE DE BREVET EUROPEEN

(11) **EP 2 823 279 B1**
(45) Date de publication et mention de la délivrance du brevet: **25.12.2019**
(21) Numéro de dépôt: 13708795.3
(22) Date de dépôt: 08.03.2013
(51) Int. Cl.: G01M 11/02, G01B 11/24

(54) **PROCEDE ET APPAREIL DE MESURE DE LA STRUCTURE GEOMETRIQUE D'UN COMPOSANT OPTIQUE**
VERFAHREN UND VORRICHTUNG ZUR MESSUNG DER GEOMETRISCHEN STRUKTUR EINER OPTISCHEN KOMPONENTE
METHOD AND APPARATUS FOR MEASURING THE GEOMETRIC STRUCTURE OF AN OPTICAL COMPONENT

(30) Priorité: 09.03.2012 EP 12290084
(43) Date de publication de la demande: 14.01.2015
(73) Titulaire: Essilor International, 94220 Charenton-le-Pont (FR)
(72) Inventeur: GUEU, Stéphane, F-94227 Charenton le Pont cedex (FR); LAVILLONNIERE, Nicolas, F-94227 Charenton le Pont cedex (FR); MURADORE, Fabien, F-94227 Charenton le Pont cedex (FR); LAKHOUA, Asma, F-94227 Charenton le Pont cedex (FR)
(74) Mandataire: Plasseraud IP
(86) Numéro de dépôt international: PCT/EP2013/054751
(87) Numéro de publication internationale: WO 2013/132072

(56) Documents cités:
- EP-A1- 2 228 623
- DE-A1-102004 047 531
- FR-A1- 2 813 391
- JP-A- 2001 227 908
- US-A1- 2011 134 438
- US-A1- 2012 013 916
- US-A1- 2012 069 349
- US-B1- 6 256 098
- BARBOSA E A ET AL: "Measurement of low-derivative surface lenses by two-laser holography with Bi12TiO20 crystals", APPLIED OPTICS, OPTICAL SOCIETY OF AMERICA, WASHINGTON, DC; US, vol. 48, no. 27, 20 septembre 2009 (2009-09-20), pages 5114-5120, XP001548435, ISSN: 0003-6935, DOI: 10.1364/AO.48.005114 [extrait le 2009-09-10]

## Description

### Domaine de l'invention

La présente invention a pour objet un procédé et un système de mesure de la structure géométrique ou optique d'un composant optique.

Le procédé selon l'invention permet de mesurer de façon absolue les deux faces d'un composant optique. On entend par mesure absolue une mesure qui ne nécessite aucune connaissance préalable du composant hormis son indice de réfraction. La mesure de faces est susceptible de nombreuses applications industrielles. Elle est notamment utile dans le domaine ophtalmique pour le contrôle ou la mesure de lentilles ophtalmiques; dans ce cas, la réalisation de faces complexes nécessite la détermination simultanée de centaines de coefficients.

### Arrière plan de l'invention

Cette section est destinée à introduire le lecteur aux divers aspects de l'art, qui peuvent être liés à différents aspects de la présente invention qui sont décrits et / ou revendiqués ci-dessous. Cette discussion est considérée comme utile pour fournir au lecteur des informations d'arrière-plan afin de faciliter une meilleure compréhension des différents aspects de la présente invention. En conséquence, il doit être entendu que ces déclarations doivent être lues à cette lumière, et non comme un exposé de l'art antérieur.

EP-A-0 644 411 au nom de la demanderesse décrit un appareil de déflectométrie en réflexion ou en transmission. Cet appareil permet la mesure par réflexion ou transmission de la structure géométrique d'un composant optique. Le principe d'un tel appareil de mesure est d'éclairer le composant optique à mesurer par un rayonnement de front d'onde connue - dans le cas le plus simple une onde plane - et de mesurer le front d'onde après réflexion ou transmission sur le composant optique à mesurer. La mesure du front d'onde après réflexion ou transmission permet de remonter aux caractéristiques géométriques du composant à mesurer.

On sait ainsi déterminer la géométrie d'une face du composant ; la géométrie de l'autre face du composant étant supposée connue pour les calculs. Il existe donc un besoin d'un appareil de mesure, qui permette de déterminer les différentes caractéristiques d'un composant optique, et notamment de ses deux faces. Un tel appareil permet notamment de mesurer efficacement des lentilles ophtalmiques progressives, en déterminant de façon exacte la forme de chacune de leurs deux faces et en positionnant parfaitement une face par rapport à l'autre sans avoir à formuler d'hypothèse sur l'une de ces faces.

FR-2 813 391 A1, également au nom de la demanderesse, décrit un procédé de mesure de la structure géométrique d'un composant optique mettant en œuvre un couple de mesures en transmission d'un composant optique. Mais la précision de la structure géométrique reconstruite n'est pas toujours satisfaisante du fait que chacune des deux mesures combine les effets des deux faces traversées.

On connaît par ailleurs DE102004047531, où deux mesures interférométriques sont mises en œuvre, l'une en réflexion l'autre en transmission, pour déterminer une topographie superficielle et une distribution interne d'indice de réfraction d'un organisme vivant (cellule ou groupe de cellules). Mais de façon implicite, pour atteindre un résultat absolu, qui permette de traduire la mesure de variation de phase d'une onde optique réfléchie ou transmise, en une carte de hauteurs ou de variations d'indice de réfraction, la mesure que décrit ce document requiert une connaissance a priori de la topographie ou de la distribution en indice de réfraction de l'organisme.

EP 2 228 623 A1 divulgue un procédé de mesure d'une forme en modifiant la position relative d'un interféromètre microscopique par rapport à une lentille-échantillon qui tourne autour d'un axe de rotation. Le procédé est divisé en une mesure d'une surface supérieure où la lentille-échantillon est supportée par une surface arrière, et une mesure d'une surface arrière où la lentille-échantillon est supportée par la surface supérieure. En combinant des premières informations de forme d'une surface latérale de rebord acquises par la mesure de la surface supérieure, et des secondes informations de forme de la surface latérale de rebord acquises par la mesure de la surface arrière, la relation de position relative entre la surface supérieure de l'échantillon et la surface arrière est calculée.

JP 2001 227908 A divulgue un appareil de mesure optique capable de mesurer les configurations de surface de deux surfaces de lentille opposées simultanément à grande vitesse en utilisant deux têtes optiques. Dans l'appareil, au moins une tête optique destinée à mesurer les informations de surface d'un élément optique au moyen d'interférences est fournie sur chacune d'au moins deux surfaces opposées de l'élément optique. Des plaques de phase avec des directions de polarisation mutuellement perpendiculaires sont disposées dans les chemins optiques des têtes optiques ou dans des chemins optiques s'étendant des têtes optiques aux surfaces de l'élément optique, afin d'empêcher qu'un faisceau lumineux provenant de l'une des têtes n'atteigne les moyens de détection de lumière de l'autre tête.

US 2011/134438 A1 divulgue un procédé de mesure qui comprend une étape consistant à amener une lumière de référence à entrer dans un objet placé dans un premier milieu afin de mesurer un premier front d'onde transmis, une étape consistant à amener la lumière de référence à entrer dans un objet placé dans un second support afin de mesurer un second front d'onde transmis, une étape de mesure de première et seconde positions de placement où l'objet est placé dans les premier et second supports, et une étape de calcul d'une distribution d'indice de réfraction interne de l'objet utilisant des résultats de mesure des premier et second fronts d'onde transmis. L'étape de calcul calcule la distribution interne d'indice de réfraction à partir de laquelle une composante de forme de l'objet est retirée en utilisant les résultats de mesure des premier et second fronts d'onde transmis, ainsi que des premier et second fronts d'onde transmis de référence d'un objet de référence à placer à des positions identiques aux première et seconde positions de placement.

Barbosa E. A. ET AL. : « Measurement of low-derivative "Measurement of low-derivative surface lenses by two-laser holography with Bi12TiO20 crystals", APPLIED OPTICS, OPTICAL SOCIETY OF AMERICA, WASHINGTON, DC; US, vol. 48, no. 27 (20090920) divulgue une méthode d'analyse profilométrique et réfractive de lentilles à rayons de courbure et/ou distances focales élevées, par holographie photoréfractive utilisant un cristal de Bi₁₂TiO₂₀ comme support d'enregistrement et deux diodes laser rouges comme sources lumineuses. Ces lasers sont alignés et accordés de façon à obtenir des longueurs d'onde submillimétriques fournissant des interférogrammes en temps réel en holographie bicolore.

Par ailleurs, on sait mesurer les faces d'un composant optique à l'aide d'un palpeur à sonde mécanique ou optique fonctionnant point par point, face par face ou simultanement en un point de chacune des deux faces. Mais la durée d'une mesure d'une face est importante et il reste toujours difficile de positionner la mesure de la première face par rapport à la deuxième face. En outre une mesure point par point requiert en général des moyens de déplacement d'une sonde (mécanique ou optique) extrêmement précis qui la rendent relativement coûteuse à l'acquisition et à l'entretien et difficile à déployer dans sur un site industriel.

### Résumé de l'invention

La présente invention a pour but de résoudre les inconvénients précités et propose de déterminer la structure géométrique d'un composant optique à partir de deux mesures non destructives. Au moins une de ces mesures fonctionne en mode zonal ou mode multipoint (par opposition au mode « point à point » introduit plus haut) et au moins une de ces mesures est réalisée sur un signal d'un MS1 résultant d'une transformation d'un signal sonde par une seule des faces, et où chacune de ces faces est inconnue a priori. Cette détermination est en outre fondée sur une reconstruction numérique de chacune des faces du composant à partir desdites mesures.

L'invention atteint ce but grâce aux caractéristiques de la revendication 1, selon un premier aspect et grâce aux caractéristiques de la revendication 12, selon un deuxième aspect.

Les revendications secondaires présentent des conceptions avantageuses et des perfectionnements de l'invention.

Selon le premier aspect, l'invention concerne un procédé de mesure de la structure géométrique d'un composant délimité par une première face 10 et une deuxième face 20; ledit procédé comprenant les étapes de:
S1 Mesure d'un premier signal MS1 résultant d'une première transformation d'un premier signal sonde PS1 par ladite première face 10, une première simulation de ladite première transformation permettant d'obtenir une première estimation ES1 du signal résultant de ladite première transformation du premier signal sonde PS1 par au moins une première face virtuelle 1 1 connue et positionnée dans un premier repère de mesure R1 de manière identique à ladite première face 10 lors de la mesure du premier signal MS1 ;
S2 Mesure d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation ES2 du signal résultant de ladite deuxième transformation du deuxième signal sonde PS2 par au moins une deuxième face virtuelle 21 connue et positionnée dans un deuxième repère de mesure R2 de manière identique à ladite deuxième face 20 lors de la mesure du deuxième signal MS2 ;
   Où au moins une des mesures parmi la mesure du premier signal MS1 et la mesure du deuxième signal MS2 est une mesure zonale;
S3 Détermination d'une troisième transformation permettant de passer du premier repère R1 au deuxième repère R2, la connaissance de la troisième transformation passant par une détermination indépendante de la mesure du premier signal MS1 et du deuxième signal MS2;
S10 Estimation de ladite première face 10 réalisée à partir du premier signal MS1 , de ladite première simulation et d'une première fonction coût V1 quantifiant un écart entre l'estimation ES1 et le premier signal MS1 ;
S20 Estimation de ladite deuxième face 20 réalisée à partir du deuxième signal MS2, de ladite deuxième simulation, de ladite troisième transformation et d'une deuxième fonction coût V2 quantifiant un écart entre l'estimation ES2 et le deuxième signal MS2.

Selon le deuxième aspect, l'invention concerne un système de mesure de la structure géométrique d'un composant délimité par une première face 10 et une deuxième face 20; ledit système comportant :
- un premier moyen de mesure MM1 d'un premier signal MS1 résultant d'une première transformation d'un premier signal sonde PS1 par au moins ladite première face 10, une première simulation de ladite première transformation permettant d'obtenir une première estimation ES1 du signal résultant de ladite première transformation du premier signal sonde PS1 par au moins une première face 11 virtuelle connue et positionnée dans un premier repère de mesure R1 de manière identique à ladite première face 10 lors de la mesure du premier signal MS1 ;
- un deuxième moyen de mesure MM2 d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation ES2 du signal résultant de ladite deuxième transformation du deuxième signal sonde PS2 par au moins une deuxième face 21 virtuelle connue et positionnée dans un premier repère de mesure R2 de manière identique à ladite deuxième face 20 lors de la mesure du deuxième signal MS2;
   Où au moins un desdits moyens de mesure MM1 , MM2 réalise une mesure zonale ;
- un moyen MD pour déterminer une troisième transformation permettant de passer du premier repère R1 au deuxième repère R2, la connaissance de la troisième transformation passant par une détermination indépendante de la mesure du premier signal MS1 et du deuxième signal MS2 ;
- un premier moyen de calcul CM1 configuré pour estimer ladite première face 10 à partir du premier signal MS1 , de ladite première simulation, d'une première face 1 1 virtuelle et d'une première fonction coût V1 quantifiant un écart entre la première estimation ES1 et le premier signal MS1 ;
- un deuxième moyen de calcul CM2 configuré pour estimer ladite deuxième face 20 à partir du deuxième signal MS2, de ladite deuxième simulation, d'une deuxième face 21 virtuelle, de ladite troisième transformation et d'une deuxième fonction coût V2 quantifiant un écart entre la deuxième estimation ES2 et le deuxième signal MS2.

La méthode selon l'invention présente l'avantage de réaliser une détermination de la structure d'un composant qui est très rapide par rapport aux techniques de mesure mécaniques ou optiques directes existantes (palpage point à point à sonde mécanique ou optique par exemple ...).

Avantageusement, l'au moins une mesure zonale ou « multipoint » (par exemple la mesure du premier signal) peut, elle-même, résulter d'une collection d'un nombre restreint de mesures zonales élémentaires. Ces mesures zonales élémentaires mesurent chacune un premier signal élémentaire résultant d'une première transformation du premier signal sonde PS1 par une zone de la première face 10. L'ensemble des zones couvrant la première face. Dans ce cas, une étape de raboutage des mesures zonales élémentaires est nécessaire. Ceci permet avec un même moyen de mesure MM1 d'obtenir une estimation de la première dace plus précise que lorsque la mesure zonale est réalisée en une unique prise, la mesure zonale réalisée par la collection d'un nombre restreint de mesures zonales élémentaires restant plus rapide et simple à mettre en oeuvre qu'une mesure point à point.

Par ailleurs, il est possible de mettre en œuvre la méthode selon l'invention en employant deux mesures réalisées sur chacune des faces qui sont de nature très différente. La première mesure est par exemple une mesure en réflexion, la seconde mesure est réalisée par exemple en transmission. Mais d'autres géométries sont possibles comme réflexion/réflexion. De même, la première mesure est une mesure de défléctométrie par réflexion de franges et la deuxième mesure est une mesure, du type Hartmann mais alternativement la première mesure peut aussi bien être une mesure de déformation d'un signal optique réfléchi par la première face et la deuxième mesure est une mesure de grossissement, ou grandissement, d'un signal optique transmis par la première et la deuxième face.

Ainsi, la methode selon l'invention présente également l'avantage de pouvoir être mise en œuvre à partir d'équipements existant configurés pour réaliser des mesures de faces mais qui ne comprennent pas des moyens de calcul pour reconstruire ces faces dans un référentiel qui n'est pas lié à eux-même.

Un troisième avantage de la méthode selon l'invention est lié à la forme sous laquelle la détermination de la structure est produite : les étapes de reconstruction des faces présentées plus bas emploient une représentation des faces sous une forme analytique. En outre ; la structure du composant telle qu'elle est délivrée par la méthode selon l'invention possède une forme analytique : ceci est particulièrement adaptée à l'emploi ultérieur de la structure estimée dans des moyens de simulations numériques.

Un quatrième avantage, de la méthode selon l'invention réside dans l'excellente précision qu'elle permet d'atteindre sur l'évaluation de hauteurs des faces du composant optique alors que l'amplitude de la variation de hauteur est importante et qu'aucune connaissance d'aucune de ces faces n'est requise a prioiri.

Les différents modes de réalisation de l'invention trouvent des applications dans la mesure ou le contrôle de pièces usinées : par exemple des lentilles ophtalmiques. Dans ce cas, la réalisation de faces complexes nécessite la détermination simultanée de centaines de coefficients.

### Brève description des dessins

L'invention sera mieux comprise et illustrée au moyen des modes de réalisation et les exemples d'exécution suivants, nullement limitatifs, en référence aux figures annexées sur lesquelles:
Figure 1, montre l'ordinogramme d'une méthode de mesure selon un mode de réalisation de l'invention ;
Figure 2, présente un exemple de mesure d'un premier signal MS1 mise en œuvre dans ladite méthode selon un mode de réalisation de l'invention ;
Figure 3 présente un exemple d'étape de mesure d'un deuxième signal MS2 mise en oeuvre dans ladite méthode selon un mode de réalisation de l'invention;
Figure 4 présente un exemple d'étape de détermination d'une troisième transformation mise en oeuvre dans ladite méthode selon un mode de réalisation de l'invention;
Figure 5, présente schématiquement un mode de réalisation d'un système de mesure de la structure d'un composant selon un mode de réalisation de l'invention.

### Description détaillée des modes de réalisation préférés

Il est entendu que les chiffres et les descriptions de la présente invention ont été simplifiés pour illustrer les éléments qui sont pertinents pour une compréhension claire de la présente invention, tout en éliminant, à des fins de clarté, de nombreux autres éléments trouvés dans les procédés de mesure par reconstruction des faces d'un composant optique. Cependant, parce que ces éléments sont bien connus dans l'art antérieur, une discussion détaillée de ces éléments n'est pas prévue ici. La présente divulgation est dirigée vers toutes ces variations et les modifications connues de l'homme de l'art.

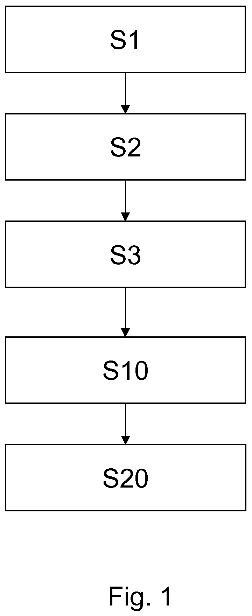

La figure 1 représente un ordinogramme comportant 5 étapes d'une méthode de mesure de la structure géométrique d'un composant selon un mode de réalisation de l'invention. Dans ce qui suit, ces cinq étapes sont explicitées et détaillées pour la mesure de la structure géométrique d'une lentille ophtalmique comportant une première face 10, par exemple convexe, et une deuxième face 20, par exemple concave.

Avantageusement, le composant optique est une lentille ophtalmique. Avantageusement, le composant optique est une lentille ophtalmique progressive.

### Etape S1 : Mesure de la première face 10 par une méthode de réflexion de franges ;

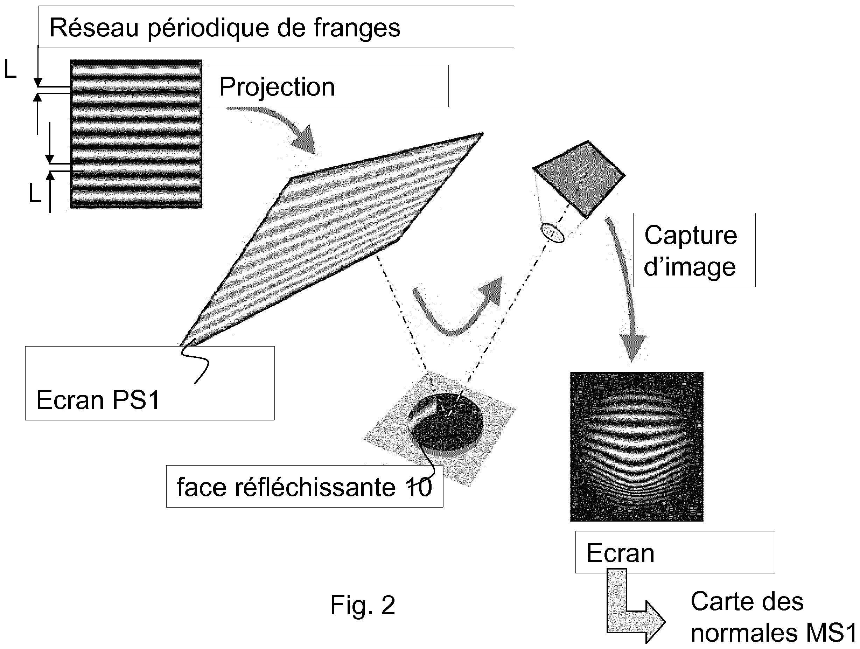

Comme représenté sur la figure 2, on projette sur la première face 10 du composant un réseau périodique de franges PS1, constitué par exemple par des bandes lumineuses de largeur L éclairées uniformément par de la lumière blanche et séparées par des bandes de largeur L non éclairées. Le réseau de franges est réfléchi par la face 10 et forme une image déformée du réseau. Cette image est capturée par un dispositif de capture d'image, par exemple une caméra numérique sensible à la lumière dans le spectre visible. Cette image (ou jeu de plusieurs images) est utilisée pour calculer une carte MS1 des directions normales à la face 10 en un nombre choisi de ses points. Ainsi la transformation T1 permet de passer du signal PS1 à une carte MS1 de normales « mesurées » de la face 10. Une simulation permet d'obtenir une première estimation absolue ES1 des normales pour une face initiale connue. Par l'emploi du qualificatif « absolu » on entend indiquer que l'estimation permet d'accéder à un résultat sans ambiguité. Tel n'est pas le cas, par exemple d'une mesure interférométrique en géométrie de réflexion sur la premiere face, réalisée à une longueur d'onde λ. Puisque ce type de mesure est fondé sur une mesure de variation de phase, sa simulation permet d'accéder uniquement à une carte des hauteurs de la première face qui est ambiguë, modulo λ : l'estimation dans ce cas n'est pas absolue. La carte MS1 des normales mesurées constitue la cible d'un problème de reconstruction qui est résolu par optimisation à l'étape ultérieure S10 à partir de la connaissance de la simulation permettant d'obtenir la première estimation absolue .

Bien entendu, la présente invention n'est pas limitée au mode de réalisation décrit à titre d'exemple; ainsi, on peut utiliser pour mesurer le première signal MS1 d'autres méthodes que la déflectométrie de frange en réflexion comme par exemple une méthode de déflectométrie par franges en projection ou en utilisant un réseau de Ronchi.

Avantageusement, la mesure du premier signal MS1 est une mesure zonale ou multipoint. Plus précisément on qualifie ici de « zonale» ou de « multipoint »une mesure d'un signal MS1 résultant d'une première transformation d'un signal sonde par, simultanémént, une pluralité de points de la première face du composant optique.

Dans un premier mode de réalisation, la première face 10 est éclairée par un réseau de franges et l'étendue de ce réseau est supérieure à la taille de la première face 10. Ainsi la mesure zonale permet de mesurer en une seule étape rapide et simple la totalité de la face 10.

Avantageusement, la mesure zonale peut être obtenue par une collection de mesures zonales élémentaires réalisées par exemple avec un réseau de franges comme décrit plus haut, éclairant uniquement une fraction de la première surface que l'on dénommera « zone élémentaire ». La mesure zonale élémentaire mesure le signal issu de la réflexion du réseau de franges par la zone élémentaire. Les mesures zonales élémentaires sont répétées jusqu'à ce que les zones élémentaires couvrent l'ensemble de la première face. La mesure zonale est obtenue par raboutage des différentes mesures zonales élémentaires.

Un exemple de ce deuxième mode de réalisation pour une mesure zonale réalisé à partir de deux mesures zonales élémentaires peut être décrit comme suit : la première face 10 est éclairée par un réseau de franges dont l'étendue est inférieure à la surface totale de la première face 10. Considérons par exemple que le réseau de frange couvre 60% de la surface de la première face 10. Une première mesure zonale élémentaire est réalisée comme indiqué ci-dessus sur une première zone élémentaire Z1 correspondant aux 60% de la première face couverts par le réseau pour une première position de la première face par rapport au réseau. Pour mesurer l'intégralité de la première face 10, on déplace ensuite ladite première face 10 par rapport au réseau afin que ce dernier soit projeté sur une autre partie de la face 10 et couvre une deuxième zone élémentaire Z2, par exemple une zone couvrant toujours 60% de la surface de la première face, mais où les zones élémentaires Z1 et Z2 se recouvrent sur une surface correspondant à 20% de la surface totale de la première face. Pour effectuer ces deux mesures zonales élémentaires, il est également possible de déplacer une tête de mesure projetant le signal sonde sur la deuxième zone élémentaire après l'avoir projé sur la premiere zonz Z1. On réalise enfin un raboutage des deux mesures zonales élémentaires pour constituer la mesure du premier signal SM1 à partir du signal sonde que constitue le réseau de franges. Le raboutage est effectué numériquement en cherchant à maximiser la fonction d'autocorrélation du signal SM1 sur la zone de recouvrement entre les deux zones élémentaires Z1 et Z2. Dans ce cas, une seule contrainte s'impose : il est nécessaire que la zone de recouvrement entre les zones élémentaires contienne suffisamment d'information pour obtenir une bonne fonction d'autocorrélation.

Ce recouvrement entre les zones élémentaires n'est pas indispensable dans le cas où la première face 10 est pourvue de repère, optique ou mécanique, permettant de positionner facilement une des mesures zonales élémentaires par rapport à l'autre comme par exemple pour un verre unifocal.

Préférentiellement, le nombre des mesures zonales élémentaires permettant de réaliser une mesure zonale d'une des faces du composant ne dépasse pas 10.

Ce deuxième mode de réalisation, qui ne se limite pas au type de mesure en réflexion d'un réseau de franges, présente l'avantage de permettre de réaliser une mesure zonale en plusieurs prises, pour certaines applications de permettre une mesure d'une face de grande surface avec un même signal sonde ou encore d'obtenir une précision encore plus grande sur la mesure zonale.

### Etape S2 : Mesure en transmission, au travers la première et la deuxième face par une méthode de type Hartmann :

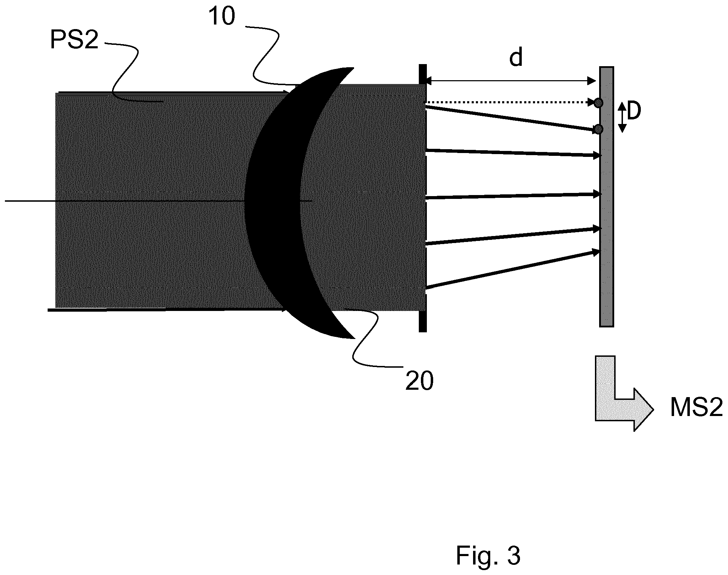

Comme représenté sur la figure 3, on envoie un faisceau optique à rayons parallèles PS2 au travers des faces 10 et 20 du composant à mesurer. Les rayons constituant le faisceau subissent une déviation liée à la réfraction aux deux interfaces 10, 20 du composant. Une partie des rayons ainsi déviés passe ensuite au travers une matrice d'ouvertures pour former des faisceaux secondaires qui sont enfin interceptés par un écran. Une image de l'écran est capturée par un dispositif de capture d'image, par exemple une caméra numérique sensible à la lumière dans le spectre visible, on acquiert les décalages des faisceaux secondaires traduits en déviations des rayons lumineux incidents caractéristiques de l'effet optique du composant mesuré. Par un traitement connu réalisé sur l'image capturée, on traduit ces décalages en une carte MS2 des normales au front d'onde transmis par le composant. Ainsi la transformation T2 permet de passer du signal PS2 à une carte MS2 de déviations « mesurées ».

La connaissance de la déviation des rayons est associée à une modélisation du comportement du système de mesure de type Hartmann. Fondée sur cette modélisation, une simulation de la déviation des rayons lumineux par un composant possédant deux face connues permet d'obtenir une estimation absolue des déviations obtenue pour ce composant. La deuxième mesure mise en œuvre est singulière en ce qu'une simulation de son fonctionnement permet d'accéder à une estimation abolue des faces du composant. La carte MS2 des déviations mesurées constitue la cible d'un problème de reconstruction qui est résolu par optimisation à l'étape ultérieure S20.

Bien entendu, la présente invention n'est pas limitée au mode de réalisation décrit à titre d'exemple; ainsi, on peut utiliser pour mesurer le deuxième signal MS2 d'autres méthodes que la déflectométrie de Hartmann en transmission comme par exemple une méthode de déflectométrie de Shack-Hartmann, par franges en transmission ou par Schlieren.

Dans un premier mode de réalisation, le premier signal MS1 résulte de la première transformation du premier signal sonde PS1 par ladite première face 10 ; et le deuxième signal MS2 résulte de la deuxième transformation du deuxième signal sonde PS2 par ladite première face 10 et ladite deuxième face 20.

Dans un deuxième mode de réalisation, le premier signal MS1 résulte de la première transformation du premier signal sonde PS1 par ladite première face 10 ; et le deuxième signal MS2 résulte de la deuxième transformation du deuxième signal sonde PS2 par ladite deuxième face 20.

Avantageusement, le premier et/ou le deuxième signal sonde PS1, PS2 est un signal optique.

Avantageusement, le premier signal MS1 est une carte de normales à la première face 10 obtenue par mesure de déflectométrie d'un signal optique constitué par un réseau périodique réfléchi par la première face 10 et l'étape S2 de mesure du deuxième signal MS2 est une mesure déflectométrie d'un signal optique transmis par la première et la deuxième face 10, 20.

Avantageusement, : l'étape S1 de mesure du premier signal MS1 est une mesure de déformation d'un signal optique réfléchi par la première face 10 et l'étape S2 de mesure du deuxième signal MS2 est une mesure de grossissement, ou grandissement, d'un signal optique transmis par la première et la deuxième face 10, 20.

Avantageusement, la mesure du deuxième signal MS2 est une mesure zonale.

Avantageusement la mesure du premier signal MS1 et la mesure du deuxième signal MS2 sont des mesures zonales.

Avantageusement ladite mesure zonale est réalisée au moyen d'une collection de mesures zonales élémentaires, où lesdites mesures zonales élémentaires mesurent chacune un signal élémentaire résultant d'une transformation d'un signal sonde par une zone élémentaire de la (ou des) face(s), de sorte que lesdites zone élémentaires couvrent la totalité de ladite (ou desdites) face(s).

Avantageusement, les étapes de mesure S1, S2 sont mises en œuvre par un unique équipement.

### Etape S3 : Détermination d'une troisième transformation permettant de passer du premier repère R1 au deuxième repère R2

Lorsque la mesure du premier signal MS1 dans un repère R1 est réalisée en réflexion sur la première face 10, seule une reconstruction de la première face 10 est réalisable à partir de cette première mesure SM1. La mesure MS2 de la deuxième face est réalisée dans un repère R2. Il est nécessaire de connaître une transformation pour passer du repère R1 au repère R2. L'étape de reconstruction de la deuxième face 20 à partir d'une deuxième mesure MS2 réalisée en transmission ne permet en général pas à elle seule de positionner et d'orienter la deuxième face estimée (ou reconstruite) par rapport à la première face estimée. La connaissance d'une troisième transformation permettant de passer d'un premier repère R1 lié à la mesure du premier signal MS1 à un deuxième repère R2 lié à la mesure du deuxième signal MS2 est nécessaire pour y parvenir.

Par repère R1, R2 on entend ici repère d'un espace affine, défini par une origine et 3 directions indépendantes. La troisième transformation est donc une transformation affine qui peut donc être définie au moyen d'un vecteur qui sépare l'origine de R1 et l'origine de R2 et d'une matrice de rotation d'ordre 3 pour exprimer les rotations nécessaire pour passer des axes du repère R1 aux axes du repère R2.

Pour le présent mode de réalisation, la connaissance de la troisième transformation passe par une détermination indépendante de la mesure du premier et du deuxième signal MS2.

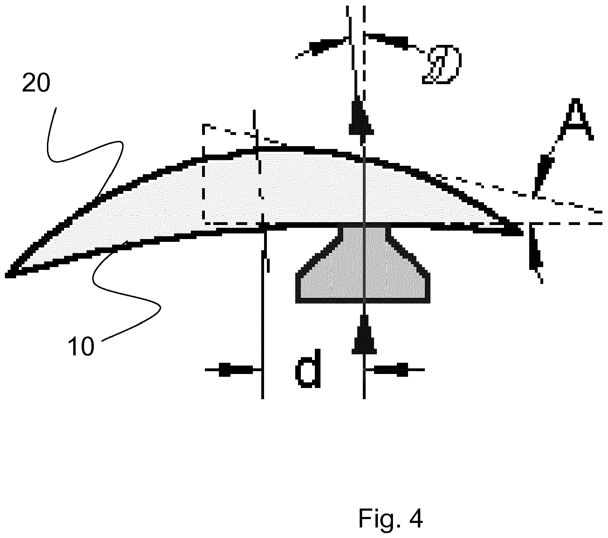

Comme représenté sur la figure 4, la troisième transformation peut être déterminée en un point de référence : l'épaisseur au centre du composant est mesurée par exemple à l'aide d'un système à palpage mécanique ou optique. Ceci permet de connaître la distance entre les faces 10 et 20 du composant en ce point de référence.

L'étape S3 dépend du type de mesure effectuée aux étapes S1 et S2.

En effet, si la mesure des étapes S1 et S2 concerne des altitudes (par exemple dans un palpage mécanique), les informations dont on dispose sont suffisantes pour reconstruire entièrement la face.

Si la mesure concerne des données d'ordre un (par exemple des normales, ou des déviations optiques), il y a une indétermination et la reconstruction ne peut avoir lieu sans donner l'altitude d'un point de la face (le problème de reconstruction a une infinité de solutions). Pour résoudre ce problème, une mesure de l'épaisseur au centre du composant permet de positionner dans l'espace la face à reconstruire.

Dans le cas d'une mesure d'ordre 2 (par exemple une mesure de courbure, ou de grandissement) il y a deux indéterminations. Il faut donner une altitude en un point de la face et une normale en un point de la face pour garantir l'unicité de la solution. Ainsi, on peut mesurer l'épaisseur au centre du composant pour déterminer l'altitude de la deuxième face, ainsi que le prisme du composant qui indiquera une normale à la deuxième face.

Si le prisme est mesuré par un moyen optique à l'aide d'un rayon incident normal à la première face, alors la mesure de prisme peut être directement traduite en transformation entre la première face et la deuxième face. Si la mesure de prisme est effectuée par un rayon incident qui n'est pas normal à la première face, alors le prisme dépend de la deuxième face. Il faut donc reconstruire simultanément la deuxième face et l'orientation de la deuxième face dans l'espace (l'altitude étant donnée par la mesure de l'épaisseur centre). Dans cette dernière situation, l'étape S20 decrite plus bas, conduit à une détermination simultanée de la troisième transformation et de la deuxième face 20.

Bien entendu, la présente invention n'est pas limitée au mode de réalisation décrit à titre d'exemple; ainsi, on peut utiliser pour déterminer la troisième transformation d'autres méthodes que les méthodes optiques en transmission évoquées comme par exemple une méthode optique en réflexion, par palpage mécanique ou encore par palpage optique.

Les étapes de mesure S1, S2 sont réalisées sur des équipements de mesures différents. Cela rend nécessaire un référentiel de mesure commun pour positionner de façon absolue le composant dans l'espace. Pour le présent mode de réalisation, la première et la deuxième mesures peuvent être réalisées, chacune, à l'aide d'un système de pointé des micro-cercles portés sur l'une des faces du composant ou alternativement grâce un référentiel mécanique commun entre les systèmes de mesure qui garantit alors un positionnement dans un repère équivalent dans chacun d'entre eux. Pour ce faire, on utilise par exemple : une pince mécanique auto-centrée repérée dans l'espace.

Selon un mode de réalisation, l'étape (S3) de détermination de la troisième transformation comporte une mesure d'épaisseur du composant.

Selon un mode de réalisation, l'étape (S3) de détermination de la troisième transformation comporte en outre une mesure du prisme du composant.

### Etape S10 : Estimation de la première face 10 réalisée notamment à partir du premier signal MS1.

Une première reconstruction vise à estimer la première face 10 du composant. On considère une première face virtuelle 11 positionnée dans l'espace dans les mêmes conditions (position et orientation) que la première face 10 du composant physique lors de la mesure de déformation du réseau de franges. On appelle R1 le repère dans lequel est réalisée la mesure MS1 et dans lequel la position de la première face 10 et la position de la première face virtuelle 11 est connue.

Le principe d'une reconstruction par optimisation est connu en soi.

On définit des valeurs de départ pour la première face virtuelle 11, par exemple une forme sphérique. La simulation de la transformation du signal PS1 par la face virtuelle 11 permet de calculer une estimation ES1 des normales de la face virtuelle 11.

On définit ensuite une fonction coût V1, susceptible d'être calculée pour des valeurs courantes de la face virtuelle 11 du composant; cette fonction coût V1 est conçue pour présenter une valeur minimale ou maximale lorsque les valeurs de l'estimation ES1 de la mesure réalisée avec la face virtuelle 11 sont égales aux valeurs de la mesure MS1.

La valeur de la fonction coût permet de quantifier l'écart entre la simulation de la mesure ES1 et la mesure MS1. Pour chaque point de mesure, on peut considérer la norme du vecteur égal à la différence entre le vecteur indiquant la normale qui est issu de la mesure et le vecteur indiquant la normale qui est issu de la simulation. Une fonction coût peut être la somme quadratique des normes des vecteurs pour tous points de mesure.

Ensuite, un algorithme d'optimisation itératif modifie la face virtuelle 11 afin de faire diminuer la fonction coût V1. Par exemple on emploie un algorithme de moindres carrés tel que Gauss-Newton, ou Levenberg-Marquardt décrite dans « Numerical Optimization », Bonnas et al., Springer 2003. A chaque itération, l'algorithme propose une nouvelle face virtuelle 11; la simulation de la transformation T1 par cette nouvelle face virtuelle 11 permet de calculer une nouvelle valeur V1 de la fonction coût.

Le processus itératif est interrompu par exemple lorsque lorsque qu'un critère d'arrêt est vérifié par exemple lorsque la valeur prise par la fonction coût V1 ne peut plus être diminuée, ou bien lorsque la valeur de la fonction coût V1 est inférieure à un seuil donné. On a alors une face virtuelle 11 qui est une estimation correcte de la face 10 mesurée puisque l'écart entre la mesure et la simulation de cette mesure via la transformation T1 est réduite.

### Etape S20 : Estimation de la deuxième face 20 réalisée notamment à partir du premier signal MS2.

On constitue un composant virtuel, dont la première face est le résultat de la reconstruction de la première face 10 estimée à partir de la mesure MS1, et dont la deuxième face est une deuxième face virtuelle 21. La la troisième transformation déterminée à l'étape S3 est la loi de passage du repère R1 dans lequel est exprimé la première face estimée vers le repère R2 dans lequel est la position de la deuxième face 20 est repérée au cours de la mesure réalisée à l'étape 2. Cette troisième transformation permet de construire le composant virtuel dans l'espace et de le placer virtuellement dans les mêmes conditions que le composant (la pièce physique) au cours de la mesure réalisée à l'étape S2.

La simulation de la transformation T2 du signal PS2 par ce composant virtuel initial de calculer une estimation d'un deuxième signal, c'est-à-dire qu'on sait obtenir par le calcul une carte de déviation (des faisceaux secondaires du signal sond PS2) produites par le composant virtuel.

Pour chaque point de cette carte de déviation, on peut considérer la norme du vecteur égal à la différence entre le vecteur dévié mesuré et le vecteur dévié simulé. Une fonction coût peut être la somme quadratique de ces normes.

Ensuite, un algorithme d'optimisation itératif modifie la face virtuelle 21 du composant afin de faire diminuer la valeur de la fonction coût V2. Un algorithme de moindres carrés tel que Gauss-Newton, ou Levenberg-Marquardt (« Numerical Optimization », Bonnas et al., Springer, 2003) peut être utilisé dans ce but. A chaque itération, l'algorithme propose une nouvelle face virtuelle 21 ; la simulation de la transformation T2 par cette nouvelle face 21 permet de calculer une nouvelle valeur V2 de la fonction coût. Le processus itératif s'arrête par exemple lorsque la valeur de la fonction coût ne peut plus être diminuée, ou bien lorsque la valeur de la fonction coût est inférieure à un seuil donné. On a alors une face virtuelle 21 qui est une estimation E2 de la face 20 mesurée puisque l'écart entre la mesure et la simulation de cette mesure via la transformation T2 est faible.

Avantageusement, chaque étape d'estimation S10, S20 est itérative, chaque itération consistant à :
a Exécuter la simulation SIM1, SIM2 à partir d'au moins une face virtuelle 11, 21 et du signal sonde PS1 ; PS2 pour obtenir une estimation ES1, ES2 du signal mesuré ;
b Mesurer l'écart entre l'estimation ES1, ES2 calculée à l'étape a et le signal mesuré MS1 ; MS2 au moyen de la fonction coût V1, V2 ;
c Si un critère d'arrêt l'écart mesuré à l'étape b n'est pas vérifié, modifier la face virtuelle 11 ; 21 de manière à réduire ledit écart et revenir à l'étape a ;
d Estimer la face 10, 20 comme la valeur de la face virtuelle 11 ; 21 prise en compte à l'étape a de la présente itération.

Avantageusement, l'estimation 21 de ladite deuxième face 20 est obtenue en outre à partir de l'estimation 11 de ladite première face 10.

Avantageusement, les étapes d'estimation S10, S20 comportent une étape où la face virtuelle 11, 21 est exprimée sous une forme analytique. L'avantage constitué par cette étape est d'accélérer les calculs, et de fournir in fine une estimation de la structure géométrique du composant sous une forme aisément manipulable lors de calculs numériques ultérieurs.

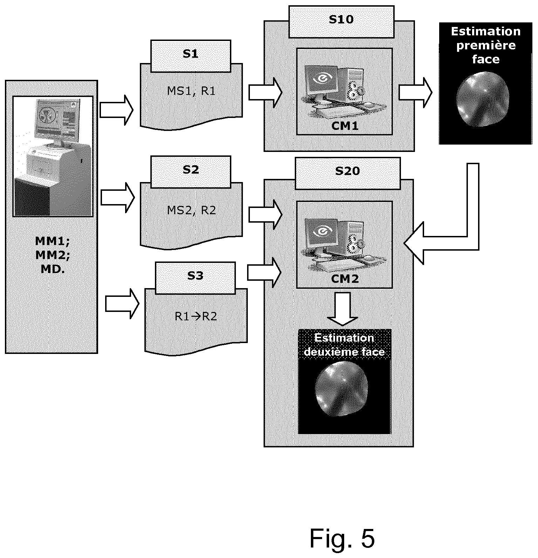

La figure 5 représente de façon schématique un système de mesure de la structure géométrique d'un composant délimité par une première face face10face et une deuxième face face20face; ledit système comportant
- un premier moyen de mesure MM1 d'un premier signal MS1 résultant d'une première transformation d'un premier signal sonde PS1 par au moins ladite première face 10, une première simulation de ladite première transformation permettant d'obtenir une première estimation ES1 du signal résultant de ladite première transformation du premier signal sonde PS1 par au moins une première face 11 virtuelle connue et positionnée dans un premier repère de mesure R1 de manière identique à ladite première face 10 lors de la mesure du premier signal MS1;
- un deuxième moyen de mesure MM2 d'un deuxième signal MS2 résultant d'une deuxième transformation d'un deuxième signal sonde PS2 par au moins ladite deuxième face 20, une deuxième simulation de ladite deuxième transformation permettant d'obtenir une deuxième estimation ES2 du signal résultant de ladite deuxième transformation du deuxième signal sonde PS2 par au moins une deuxième face 21 virtuelle connue et positionnée dans un premier repère de mesure R2 de manière identique à ladite deuxième face 20 lors de la mesure du deuxième signal MS2;
- un moyen MD pour déterminer une troisième transformation permettant de passer du premier repère R1 au deuxième repère R2
- un premier moyen de calcul CM1 configuré pour estimer ladite première face 10 à partir du premier signal MS1, de ladite première simulation, d'une première face 11 virtuelle et d'une première fonction coût V1 quantifiant un écart entre la première estimation ES1 et le premier signal MS1;
- un deuxième moyen de calcul CM2 configuré pour estimer ladite deuxième face 20 à partir du deuxième signal MS2, de ladite deuxième simulation, d'une deuxième face 21 virtuelle, de ladite troisième transformation et d'une deuxième fonction coût V2 quantifiant un écart entre la deuxième estimation ES2 et le deuxième signal MS2.

Dans l'exemple représenté sur la figure 5, l'estimation de la première surface 10 sert à l'estimation de la deuxième surface 20. Avantageusement, le premier moyen de calcul CM1 réalise une mesure de déformation d'un signal optique réfléchi par la première face 10 ; et le deuxième moyen de calcul CM2 réalise une mesure de grossissement ou grandissement d'un signal optique transmis par la première et la deuxième face 10, 20.

Alternativement, le premier moyen de calcul (CM1) réalise une carte de normales à la première face (10) obtenue par mesure de déflectométrie d'un signal optique constitué par un réseau périodique réfléchi par la première face (10) ; et
- le deuxième moyen de calcul (CM2) réalise une mesure de déflectométrie d'un signal optique transmis par la première et la deuxième face (10, 20).

Avantageusement, un système selon un mode de réalisation de l'invention comporte des moyens de mesures MM1 , MM2 d'un système de mesure optique configuré pour réaliser des mesure de faces 10, 20 d'un composant optique exprimé dans un repère propre audit système.

Avantageusement, au moins un desdits moyens de mesure MM1 , MM2 réalise une mesure zonale.

Avantageusement, lesdits premier et deuxième moyens de mesure MM1 , MM2 réalisent une mesure zonales.

L'une des applications de cette mesure de la structure géométrique à une lentille ophtalmique peut être l'analyse comparative d'une lentille après usinage avec une pièce nominale par exemple pour étudier la conformité de la pièce produite.

Il faut définir pour cela un référentiel absolu commun à la lentille ophtalmique mesurée et à la pièce nominale. Pour ce faire, on ramène la lentille ophtalmique mesurée et la pièce nominale dans un référentiel commun, par exeple lié à la pièce où est réalisée la mesure. On détermine alors la position de la lentille ophtalmique mesurée et de la pièce nominale dans le référentiel de mesure soit par l'association d'un répère mécanique sur la lentille et la pièce, comme par exemple un méplat, soit par le pointage de marquages permanent sur la lentille et la pièce, du type micro-cercles.

## Revendications

1. Procédé de mesure de la structure géométrique d'un composant optique délimité par une première face (10) et une deuxième face (20), **caractérisé en ce que** ledit procédé comprend les étapes de:
- (S1) Mesure d'un premier signal (MS1) résultant d'une première transformation d'un premier signal sonde (PS1) par ladite première face (10), une première simulation de ladite première transformation étant utilisée pour obtenir une première estimation absolue (ES1) du signal résultant de ladite première transformation du premier signal sonde (PS1) par une première face virtuelle dudit composant, ladite première face virtuelle étant connue et positionnée dans un premier repère de mesure (R1) de manière identique à ladite première face (10) lors de la mesure du premier signal (MS1);
- (S2) Mesure d'un deuxième signal (MS2) résultant d'une deuxième transformation d'un deuxième signal sonde (PS2) par au moins ladite deuxième face (20), une deuxième simulation de ladite deuxième transformation étant utilisée pour obtenir une deuxième estimation absolue (ES2) du signal résultant de ladite deuxième transformation du deuxième signal sonde (PS2) par au moins une deuxième face virtuelle dudit composant, ladite deuxième face virtuelle étant connue et positionnée dans un deuxième repère de mesure (R2) de manière identique à ladite deuxième face (20) lors de la mesure du deuxième signal (MS2) ;
Où au moins une des mesures parmi la mesure du premier signal (MS1) et la mesure du deuxième signal (MS2) est une mesure zonale, définie par une mesure multipoint du premier (respectivement second) signal résultant d'une première (respectivement deuxième) transformation du premier (respectivement deuxième) signal sonde par simultanément une pluralité de points de la première (respectivement deuxième) face du composant optique ;
- (S3) Détermination d'une troisième transformation pour passer du premier repère (R1) au deuxième repère (R2), la connaissance de la troisième transformation passant par une détermination indépendante de la mesure du premier signal (MS1) et du deuxième signal (MS2) ;
- (S10) Estimation par reconstruction numérique de ladite première face (10) réalisée à partir du premier signal (MS1), de ladite première simulation et d'une première fonction coût quantifiant un écart entre la première estimation absolue (ES1) et le premier signal (MS1);
- (S20) Estimation par reconstruction numérique de ladite deuxième face (20) réalisée à partir du deuxième signal (MS2), de ladite deuxième simulation, de ladite troisième transformation et d'une deuxième fonction coût quantifiant un écart entre la deuxième estimation absolue (ES2) et le deuxième signal (MS2).

2. Procédé selon la revendication 1, **caractérisé en ce que** la mesure du premier signal (MS1) et la mesure du deuxième signal (MS2) sont des mesures zonales.

3. Procédé selon l'une des revendication 1 à 2, **caractérisé en ce que** ladite mesure zonale est réalisée au moyen d'une collection de mesures zonales élémentaires, où lesdites mesures zonales élémentaires mesurent chacune un signal élémentaire résultant d'une transformation d'un signal sonde par une zone élémentaire de la (ou des) face(s), de sorte que lesdites zone élémentaires couvrent la totalité de ladite (ou desdites) face(s).

4. Procédé selon l'une des revendications 1 à 3, **caractérisé en ce que** le deuxième signal (MS2) résulte de la deuxième transformation du deuxième signal sonde (PS2) par ladite première face (10) et ladite deuxième face (20).

5. Procédé selon l'une des revendications 1 à 4, **caractérisé en ce que** chaque étape d'estimation (S10, S20) est itérative, chaque itération consistant à :
a) Exécuter la simulation (SIM1, SIM2) à partir d'au moins une face virtuelle et du signal sonde (PS1 ; PS2) pour obtenir une estimation (ES1, ES2) du signal mesuré ;
b) Mesurer l'écart entre l'estimation (ES1, ES2) calculée à l'étape a) et le signal mesuré (MS1 ; MS2) au moyen de la fonction coût ;
c) Si un critère d'arrêt l'écart mesuré à l'étape b) n'est pas vérifié, modifier la face virtuelle de manière à réduire ledit écart et revenir à l'étape a) ;
d) Estimer la face (10, 20) comme la valeur de la face virtuelle prise en compte à l'étape a) de la présente itération.

6. Procédé selon l'une des revendications 1 à 4, **caractérisé en ce que** ladite deuxième estimation est obtenue en outre à partir de ladite première estimation.

7. Procédé selon l'une des revendications 1 à 6, **caractérisé en ce que** le premier et/ou le deuxième signal sonde (PS1, PS2) est un signal optique.

8. Procédé selon l'une des revendications 1 à 7, **caractérisé en ce que** :
- le premier signal (MS1) est une carte de normales à la première face (10) obtenue par mesure de déflectométrie d'un signal optique constitué par un réseau périodique réfléchi par la première face (10) ;
- L'étape (S2) de mesure du deuxième signal (MS2) est une mesure par déflectométrie d'un signal optique transmis par la première et la deuxième face (10, 20).

9. Procédé selon l'une des revendications 1 à 7, **caractérisé en ce que** :
- L'étape (S1) de mesure du premier signal (MS1) est une mesure de déformation d'un signal optique réfléchi par la première face (10) ;
- L'étape (S2) de mesure du deuxième signal (MS2) est une mesure de grandissement d'un signal optique transmis par la première et la deuxième face (10, 20).

10. Procédé selon l'une des revendications 1 à 9, **caractérisé en ce que** l'étape (S3) de détermination de la troisième transformation comporte une mesure d'épaisseur du composant.

11. Procédé selon la revendication 10, **caractérisé en ce que** l'étape (S3) de détermination de la troisième transformation comporte en outre une mesure du prisme du composant.

12. Système de mesure de la structure géométrique d'un composant optique délimité par une première face (10) et une deuxième face (20), **caractérisé en ce que** ledit système comporte :
- un premier moyen de mesure (MM1) d'un premier signal (MS1) résultant d'une première transformation d'un premier signal sonde (PS1) par ladite première face (10), une première simulation de ladite première transformation étant utilisée pour obtenir une première estimation absolue (ES1) du signal résultant de ladite première transformation du premier signal sonde (PS1) par une première face virtuelle dudit composant, ladite première face virtuelle étant connue et positionnée dans un premier repère de mesure (R1) de manière identique à ladite première face (10) lors d'une mesure du premier signal (MS1);
- un deuxième moyen de mesure (MM2) d'un deuxième signal (MS2) résultant d'une deuxième transformation d'un deuxième signal sonde (PS2) par au moins ladite deuxième face (20), une deuxième simulation de ladite deuxième transformation étant utilisée pour obtenir une deuxième estimation absolue (ES2) du signal résultant de ladite deuxième transformation du deuxième signal sonde (PS2) par au moins une deuxième face virtuelle dudit composant, ladite deuxième face virtuelle étant connue et positionnée dans un premier repère de mesure (R2) de manière identique à ladite deuxième face (20) lors d'une mesure du deuxième signal (MS2);
Où au moins un desdits moyens de mesure (MM1, MM2) réalise une mesure zonale, définie par une mesure multipoint du premier (respectivement second) signal résultant d'une première (respectivement deuxième) transformation du premier (respectivement deuxième) signal sonde par simultanément une pluralité de points de la première (respectivement deuxième) face du composant optique ;
- un moyen (MD) pour déterminer une troisième transformation pour passer du premier repère (R1) au deuxième repère (R2), la connaissance de la troisième transformation passant par une détermination indépendante de la mesure du premier signal (MS1) et du deuxième signal (MS2) ;
- un premier moyen de calcul (CM1) configuré pour estimer par reconstruction numérique ladite première face (10) à partir du premier signal (MS1), de ladite première simulation, de ladite première face virtuelle et d'une première fonction coût quantifiant un écart entre la première estimation absolue (ES1) et le premier signal (MS1);
- un deuxième moyen de calcul (CM2) configuré pour estimer par reconstruction numérique ladite deuxième face (20) à partir du deuxième signal (MS2), de ladite deuxième simulation, de ladite deuxième face virtuelle, de ladite troisième transformation et d'une deuxième fonction coût quantifiant un écart entre la deuxième estimation absolue (ES2) et le deuxième signal (MS2).

13. Système selon la revendication 12, **caractérisé en ce que** chacun desdits moyens de mesure (MM1, MM2) réalise une mesure zonale.

14. Système selon la revendication 12 ou 13, **caractérisé en ce que** :
- le premier moyen de calcul (CM1) réalise une mesure de déformation d'un signal optique réfléchi par la première face (10) ; et
- le deuxième moyen de calcul (CM2) réalise une mesure de grandissement d'un signal optique transmis par la première et la deuxième face (10, 20).

## Patentansprüche

1. Verfahren zur Messung der geometrischen Struktur einer optischen Komponente, die durch eine erste Fläche (10) und eine zweite Fläche (20) begrenzt ist, **dadurch gekennzeichnet, dass** das Verfahren die folgenden Schritte umfasst:
- (S1) Messung eines ersten Signals (MS1), das sich aus einer ersten Umwandlung eines ersten Sondensignals (PS1) durch die erste Fläche (10) ergibt, wobei eine erste Simulation der ersten Umwandlung verwendet wird, um eine erste absolute Schätzung (ES1) des Signals zu erhalten, das sich aus der ersten Umwandlung des ersten Sondensignals (PS1) durch eine erste virtuelle Fläche der Komponente ergibt, wobei die erste virtuelle Fläche bekannt ist und in einer ersten Messmarkierung (R1) in einer Weise positioniert ist, die bei der Messung des ersten Signals (MS1) mit der ersten Fläche (10) identisch ist;
- (S2) Messung eines zweiten Signals (MS2), das sich aus einer zweiten Umwandlung eines zweiten Sondensignals (PS2) durch mindestens die zweite Fläche (20) ergibt, wobei eine zweite Simulation der zweiten Umwandlung verwendet wird, um eine zweite absolute Schätzung (ES2) des Signals zu erhalten, das sich aus der zweiten Umwandlung des zweiten Sondensignals (PS2) durch mindestens eine zweite virtuelle Fläche der Komponente ergibt, wobei die zweite virtuelle Fläche bekannt ist und in einer zweiten Messmarkierung (R2) in einer Weise positioniert ist, die bei der Messung des zweiten Signals (MS2) mit der zweiten Fläche (20) identisch ist;
wobei mindestens eine der Messungen aus der Messung des ersten Signals (MS1) und der Messung des zweiten Signals (MS2) eine zonale Messung ist, die durch eine Mehrpunktmessung des ersten (bzw. zweiten) Signals definiert ist, die sich aus einer ersten (bzw. zweiten) Umwandlung des ersten (bzw. zweiten) Sondensignals durch gleichzeitig eine Vielzahl von Punkten der ersten (bzw. zweiten) Fläche der optischen Komponente ergibt;
- (S3) Bestimmung einer dritten Umwandlung, um von der ersten Markierung (R1) auf die zweite Markierung (R2) überzugehen, wobei die Erkenntnis über die dritte Umwandlung über eine unabhängige Bestimmung der Messung des ersten Signals (MS1) und des zweiten Signals (MS2) gewonnen wird;
- (S10) Schätzung durch digitale Rekonstruktion der ersten Fläche (10) aus dem ersten Signal (MS1), der ersten Simulation und einer ersten Kostenfunktion, die eine Differenz zwischen der ersten absoluten Schätzung (ES1) und dem ersten Signal (MS1) quantifiziert;
- (S20) Schätzung durch digitale Rekonstruktion der zweiten Fläche (20) aus dem zweiten Signal (MS2), der zweiten Simulation, der dritten Umwandlung und einer zweiten Kostenfunktion, die eine Differenz zwischen der zweiten absoluten Schätzung (ES2) und dem zweiten Signal (MS2) quantifiziert.

2. Verfahren nach Anspruch 1, **dadurch gekennzeichnet, dass** die Messung des ersten Signals (MS1) und die Messung des zweiten Signals (MS2) zonale Messungen sind.

3. Verfahren nach einem der Ansprüche 1 bis 2, **dadurch gekennzeichnet, dass** die zonale Messung mittels einer Erfassung von elementaren zonalen Messungen durchgeführt wird, wobei die elementaren zonalen Messungen jeweils ein elementares Signal messen, das sich aus einer Umwandlung eines Sondensignals durch einen elementaren Bereich der Fläche(n) ergibt, so dass die elementaren Bereiche die Gesamtheit der Fläche(n) abdecken.

4. Verfahren nach einem der Ansprüche 1 bis 3, **dadurch gekennzeichnet, dass** sich das zweite Signal (MS2) aus der zweiten Umwandlung des zweiten Sondensignals (PS2) durch die erste Fläche (10) und die zweite Fläche (20) ergibt.

5. Verfahren nach einem der Ansprüche 1 bis 4, **dadurch gekennzeichnet, dass** jeder Schätzungsschritt (S10, S20) iterativ ist, wobei jede Iteration aus Folgendem besteht:
a) Ausführen der Simulation (SIM1, SIM2) aus mindestens einer virtuellen Fläche und dem Sondensignal (PS1; PS2), um eine Schätzung (ES1, ES2) des gemessenen Signals zu erhalten;
b) Messen der Differenz zwischen der in Schritt a) berechneten Schätzung (ES1, ES2) und dem durch die Kostenfunktion gemessenen Signal (MS1 ; MS2);
c) Wenn ein Kriterium zum Festhalten der in Schritt b) gemessenen Differenz nicht überprüft wird, Ändern der virtuellen Fläche, sodass die Differenz reduziert wird, und zurückkehren zu Schritt a);
d) Schätzen der Fläche (10, 20) als Wert der virtuellen Fläche, die in Schritt a) dieser Iteration berücksichtigt wurde.

6. Verfahren nach einem der Ansprüche 1 bis 4, **dadurch gekennzeichnet, dass** die zweite Schätzung ferner aus der ersten Schätzung erhalten wird.

7. Verfahren nach einem der Ansprüche 1 bis 6, **dadurch gekennzeichnet, dass** das erste und/oder das zweite Sondensignal (PS1, PS2) ein optisches Signal ist.

8. Verfahren nach einem der Ansprüche 1 bis 7, **dadurch gekennzeichnet, dass**:
- das erste Signal (MS1) eine Normal Map der ersten Fläche (10) ist, die durch Messen der Deflektometrie eines optischen Signals erhalten wird, das aus einem von der ersten Fläche (10) reflektierten periodischen Netzwerk besteht;
- Schritt (S2) zur Messung des zweiten Signals (MS2) eine deflektometrische Messung eines optischen Signals ist, das von der ersten und zweiten Fläche (10, 20) übertragen wird.

9. Verfahren nach einem der Ansprüche 1 bis 7, **dadurch gekennzeichnet, dass**:
- Schritt (S1) zur Messung des ersten Signals (MS1) eine Messung der Verformung eines optischen Signals ist, das von der ersten Fläche (10) reflektiert wird;
- Schritt (S2) zur Messung des zweiten Signals (MS2) eine Messung der Vergrößerung eines optischen Signals ist, das von der ersten und zweiten Fläche (10, 20) übertragen wird.

10. Verfahren nach einem der Ansprüche 1 bis 9, **dadurch gekennzeichnet, dass** der Schritt (S3) zum Bestimmen der dritten Umwandlung eine Messung der Stärke der Komponente beinhaltet.

11. Verfahren nach Anspruch 10, **dadurch gekennzeichnet, dass** der Schritt (S3) zum Bestimmen der dritten Umwandlung ferner eine Messung des Prismas der Komponente umfasst.

12. System zur Messung der geometrischen Struktur einer optischen Komponente, die durch eine erste Fläche (10) und eine zweite Fläche (20) begrenzt ist, **dadurch gekennzeichnet, dass** das System Folgendes umfasst:
- ein erstes Mittel zur Messung (MM1) eines ersten Signals (MS1), das sich aus einer ersten Umwandlung eines ersten Sondensignals (PS1) durch die erste Fläche (10) ergibt, wobei eine erste Simulation der ersten Umwandlung verwendet wird, um eine erste absolute Schätzung (ES1) des Signals zu erhalten, das sich aus der ersten Umwandlung des ersten Sondensignals (PS1) durch eine erste virtuelle Fläche der Komponente ergibt, wobei die erste virtuelle Fläche bekannt ist und in einer ersten Messmarkierung (R1) in einer Weise positioniert ist, die bei einer Messung des ersten Signals (MS1) mit der ersten Fläche (10) identisch ist;
- ein zweites Mittel zur Messung (MM2) eines zweiten Signals (MS2), das sich aus einer zweiten Umwandlung eines zweiten Sondensignals (PS2) durch mindestens die zweite Fläche (20) ergibt, wobei eine zweite Simulation der zweiten Umwandlung verwendet wird, um eine zweite absolute Schätzung (ES2) des Signals zu erhalten, das sich aus der zweiten Umwandlung des zweiten Sondensignals (PS2) durch mindestens eine zweite virtuelle Fläche der Komponente ergibt, wobei die zweite virtuelle Fläche bekannt ist und in einer ersten Messmarkierung (R2) in einer Weise positioniert ist, die bei einer Messung des zweiten Signals (MS2) mit der zweiten Fläche (20) identisch ist; wobei mindestens eines der Messmittel (MM1, MM2) eine zonale Messung durchführt, die durch eine Mehrpunktmessung des ersten (bzw. zweiten) Signals definiert ist, die sich aus einer ersten (bzw. zweiten) Umwandlung des ersten (bzw. zweiten) Sondensignals durch gleichzeitig eine Vielzahl von Punkten der ersten (bzw. zweiten) Fläche der optischen Komponente ergibt;
- ein Mittel (MD) zum Bestimmen einer dritten Umwandlung, um von der ersten Markierung (R1) auf die zweite Markierung (R2) überzugehen, wobei die Erkenntnis über die dritte Umwandlung über eine unabhängige Bestimmung der Messung des ersten Signals (MS1) und des zweiten Signals (MS2) gewonnen wird;
- ein erstes Berechnungsmittel (CM1), das zum Schätzen durch digitale Rekonstruktion der ersten Fläche (10) aus dem ersten Signal (MS1), der ersten Simulation, der ersten virtuellen Fläche und einer ersten Kostenfunktion, die eine Differenz zwischen der ersten absoluten Schätzung (ES1) und dem ersten Signal (MS1) quantifiziert, konfiguriert ist;
- ein zweites Berechnungsmittel (CM2), das zum Schätzen durch digitale Rekonstruktion der zweiten Fläche (20) aus dem zweiten Signal (MS2), der zweiten Simulation, der zweiten virtuellen Fläche, der dritten Umwandlung und einer zweiten Kostenfunktion, die eine Differenz zwischen der zweiten absoluten Schätzung (ES2) und dem zweiten Signal (MS2) quantifiziert, konfiguriert ist.

13. System nach Anspruch 12, **dadurch gekennzeichnet, dass** jedes der Messmittel (MM1, MM2) eine zonale Messung durchführt.

14. System nach Anspruch 12 oder 13, **dadurch gekennzeichnet, dass**:
- das erste Berechnungsmittel (CM1) eine Messung der Verformung eines von der ersten Fläche (10) reflektierten optischen Signals durchführt; und
- das zweite Berechnungsmittel (CM2) eine Messung der Vergrößerung eines von der ersten und zweiten Fläche (10, 20) übertragenen optischen Signals durchführt.

## Claims

1. Method for measuring the geometric structure of an optical component delimited by a first face (10) and a second face (20), **characterized in that** said method comprises the steps of:
- (S1) Measurement of a first signal (MS1) resulting from a first transformation of a first probe signal (PS1) by said first face (10), a first simulation of said first transformation being used to obtain a first absolute estimation (ES1) of the signal resulting from said first transformation of the first probe signal (PS1) by a first virtual face of said component, said first virtual face being known and positioned in a first measurement reference frame (R1) in a manner identical to said first face (10) during the measurement of the first signal (MS1);
- (S2) Measurement of a second signal (MS2) resulting from a second transformation of a second probe signal (PS2) by at least said second face (20), a second simulation of said second transformation being used to obtain a second absolute estimation (ES2) of the signal resulting from said second transformation of the second probe signal (PS2) by at least one second virtual face of said component, said second virtual face being known and positioned in a second measurement reference frame (R2) in a manner identical to said second face (20) during the measurement of the second signal (MS2);
Where at least one of the measurements from among the measurement of the first signal (MS1) and the measurement of the second signal (MS2) is a zonal measurement, defined by a multipoint measurement of the first (respectively second) signal resulting from a first (respectively second) transformation of the first (respectively second) probe signal by simultaneously a plurality of points of the first (respectively second) face of the optical component;
- (S3) Determination of a third transformation in order to pass from the first reference frame (R1) to the second reference frame (R2), the knowledge of the third transformation involving an independent determination of the measurement of the first signal (MS1) and of the second signal (MS2);
- (S10) Estimation by numerical reconstruction of said first face (10) carried out on the basis of the first signal (MS1), of said first simulation and of a first cost function quantifying a discrepancy between the first absolute estimation (ES1) and the first signal (MS1);
- (S20) Estimation by numerical reconstruction of said second face (20) carried out on the basis of the second signal (MS2), of said second simulation, of said third transformation and of a second cost function quantifying a discrepancy between the second absolute estimation (ES2) and the second signal (MS2).

2. Method according to Claim 1, **characterized in that** the measurement of the first signal (MS1) and the measurement of the second signal (MS2) are zonal measurements.

3. Method according to one of Claims 1 and 2, **characterized in that** said zonal measurement is carried out by means of a collection of elementary zonal measurements, where said elementary zonal measurements each measure an elementary signal resulting from a transformation of a probe signal by an elementary zone of the face(s), so that said elementary zones cover the entirety of said face(s).

4. Method according to one of Claims 1 to 3, **characterized in that** the second signal (MS2) results from the second transformation of the second probe signal (PS2) by said first face (10) and said second face (20).

5. Method according to one of Claims 1 to 4, **characterized in that** each estimation step (S10, S20) is iterative, each iteration consisting in:
a) Executing the simulation (SIM1, SIM2) on the basis of at least one virtual face and of the probe signal (PS1; PS2) so as to obtain an estimation (ES1, ES2) of the measured signal;
b) Measuring the discrepancy between the estimation (ES1, ES2) calculated in step a) and the measured signal (MS1; MS2) by means of the cost function;
c) If a stopping criterion of the discrepancy measured in step b) is not satisfied, modifying the virtual face so as to reduce said discrepancy and return to step a);
d) Estimating the face (10, 20) as the value of the virtual face taken into account in step a) of the present iteration.

6. Method according to one of Claims 1 to 4, **characterized in that** said second estimation is obtained furthermore on the basis of said first estimation.

7. Method according to one of Claims 1 to 6, **characterized in that** the first and/or the second probe signal (PS1, PS2) is an optical signal.

8. Method according to one of Claims 1 to 7, **characterized in that**:
- the first signal (MS1) is a map of normals to the first face (10) obtained by deflectometry measurement of an optical signal consisting of a periodic grating reflected by the first face (10);
- The step (S2) of measuring the second signal (MS2) is a measurement by deflectometry of an optical signal transmitted by the first and the second face (10, 20).

9. Method according to one of Claims 1 to 7, **characterized in that**:
- The step (S1) of measuring the first signal (MS1) is a measurement of deformation of an optical signal reflected by the first face (10);
- The step (S2) of measuring the second signal (MS2) is a measurement of enlargement of an optical signal transmitted by the first and the second face (10, 20).

10. Method according to one of Claims 1 to 9, **characterized in that** the step (S3) of determining the third transformation comprises a measurement of thickness of the component.

11. Method according to Claim 10, **characterized in that** the step (S3) of determining the third transformation furthermore comprises a measurement of the prism of the component.

12. System for measuring the geometric structure of an optical component delimited by a first face (10) and a second face (20), **characterized in that** said system comprises:
- a first measurement means (MM1) for measuring a first signal (MS1) resulting from a first transformation of a first probe signal (PS1) by said first face (10), a first simulation of said first transformation being used to obtain a first absolute estimation (ES1) of the signal resulting from said first transformation of the first probe signal (PS1) by a first virtual face of said component, said first virtual face being known and positioned in a first measurement reference frame (R1) in a manner identical to said first face (10) during a measurement of the first signal (MS1);
- a second measurement means (MM2) for measuring a second signal (MS2) resulting from a second transformation of a second probe signal (PS2) by at least said second face (20), a second simulation of said second transformation being used to obtain a second absolute estimation (ES2) of the signal resulting from said second transformation of the second probe signal (PS2) by at least one second virtual face of said component, said second virtual face being known and positioned in a first measurement reference frame (R2) in a manner identical to said second face (20) during a measurement of the second signal (MS2);
Where at least one of said measurement means (MM1, MM2) carries out a zonal measurement, defined by a multipoint measurement of the first (respectively second) signal resulting from a first (respectively second) transformation of the first (respectively second) probe signal by simultaneously a plurality of points of the first (respectively second) face of the optical component;
- a means (MD) for determining a third transformation in order to pass from the first reference frame (R1) to the second reference frame (R2), the knowledge of the third transformation involving an independent determination of the measurement of the first signal (MS1) and of the second signal (MS2);
- a first calculation means (CM1) configured to estimate by numerical reconstruction said first face (10) on the basis of the first signal (MS1), of said first simulation, of said first virtual face and of a first cost function quantifying a discrepancy between the first absolute estimation (ES1) and the first signal (MS1);
- a second calculation means (CM2) configured to estimate by numerical reconstruction said second face (20) on the basis of the second signal (MS2), of said second simulation, of said second virtual face, of said third transformation and of a second cost function quantifying a discrepancy between the second absolute estimation (ES2) and the second signal (MS2).

13. System according to Claim 12, **characterized in that** each of said measurement means (MM1, MM2) carries out a zonal measurement.

14. System according to Claim 12 or 13, **characterized in that**:
- the first calculation means (CM1) carries out a measurement of deformation of an optical signal reflected by the first face (10); and
- the second calculation means (CM2) carries out a measurement of enlargement of an optical signal transmitted by the first and the second face (10, 20).
